Europäisches Patentamt

European Patent Office

Office européen des brevets

(11) Publication number: **0 260 240 B1**

# EUROPEAN PATENT SPECIFICATION

(45) Date of publication of patent specification: **17.04.91**

(51) Int. Cl.⁵: **F16D 43/21, F16D 43/20**

(21) Application number: **87850269.9**

(22) Date of filing: **07.09.87**

(54) Settable slip clutch.

(30) Priority: **10.09.86 SE 8603796**

(43) Date of publication of application:
**16.03.88 Bulletin 88/11**

(45) Publication of the grant of the patent:
**17.04.91 Bulletin 91/16**

(84) Designated Contracting States:
**CH DE ES FR GB IT LI SE**

(56) References cited:
**EP-A- 0 148 996**
**GB-A- 202 303**

(73) Proprietor: **S & L MASKIN AB**
**Box 245**
**S-444 23 Stenungsund(SE)**

(72) Inventor: **Stenmark, Dag**
**Lilla Hammar 11073**
**S-444 05 Ödsmal(SE)**
Inventor: **Gudmundsson, Sören**
**Varsaddsvägen 2**
**S-444 05 Ödsmal(SE)**

(74) Representative: **Jörneld, Bo et al**
**L.A. Groth & Co AB Västmannagatan 43**
**S-113 25 Stockholm(SE)**

## Description

The present invention relates to a settable slip clutch or coupling arranged between a driving and a driven shaft, where the clutch has a plurality of torque transmitting balls arranged in a corresponding number of recesses in the driving shaft.

## Background Art

In the settable slip clutches of the prior art it has been found that there is a hammering friction torque, due to the balls returning to their inactive positions each time the recesses in the driving shaft and the chambers in the driven shaft come opposite each other. A settable slip clutch having means for avoiding a hammering friction torque is known from the EP-A- 0 148 996. The driven shaft is in this case surrounded by a driving sleeve having individual chambers for coupling balls urged into recesses made in the surface of the driven shaft. The chambers are arranged in pairs side by side so that a first chamber of one width is combined with a second chamber having a greater width. The first chambers receive coupling balls of one group operative to transmit torque in the working drive direction and the second chambers receive movable therein coupling balls of another group operative to transmit torque in the direction opposite the working drive direction. To exert a prestressed radial force onto the coupling balls there is an elastic element positioned in an annular groove between the driving sleeve and a separate closure sleeve surrounding the driving sleeve.

The known device is of a relative complicated construction requiring a doubling of the number of chambers, each of which chambers being defined by walls diverging from each other in a fashion somewhat tricky to machine as the angle between walls seems to be important for having a safe operation. Furthermore, the number of machined details is not few and the demand for an elastic element makes the device somewhat difficult to assemble. Another drawback is that the known device is applicable only to slip clutches of a special type having a driving shaft designed as a sleeve.

## Disclosure of the Invention

To avoid the complexity of settable slip clutches of prior known art and for obtaining a more safe clutch function the improved slip clutch according to the invention is arranged between the end of a driving shaft having a cylindrical external surface and the top of a driven shaft, the length axis of which being a continuation of the driving shaft length axis. The slip clutch includes an even number of engagement balls disposed in recesses corresponding to the number of balls, each one having a center, a radius and a diameter and the recesses are made in the external surface of the driving shaft and are connected with each other by a groove also made in the external surface of the driving shaft but shallower than the recesses having a radius corresponding to the radius of the balls. The balls are thrusting into a corresponding number of chambers defined in the driven shaft top end by spaced-apart walls. In normal operation said balls are kept urged into said recesses by spring bias being settable to a desired value of the torque at which the driving shaft shall be disengaged from the driven shaft. Said chambers are arranged in pairs in such a way that the two chambers of a pair are diametrically opposed each other. The walls defining a chamber are mutually parallel and the extended wall surface lines of the chamber run on separate sides of the central axis of the driving and driven shafts. At least half of the number of the chambers has a width mainly restricted to the diameter of the ball belonging thereto. The parallel walls of each one of these restricted width chambers are also parallel to a radius drawn through a center of the chamber and through the central axis of the driving and driven shafts. At least one of the chambers at the top end of the driven shaft has an increased width being greater than the diameter of its associated ball. Thus, the chambers have different shapes determined by the widths thereof. At least one of the walls of anyone of the chambers is forming a reverse lock.

Besides obtaining a more simple manufacturing of the settable slip clutches also a more safe clutch function is obtained by the improved clutch according to the invention. The expanded chamber has the effect that its associated ball will move sideways when the clutch is about to slip. The spaced relationships of the balls and the recesses will thus not coincide, with the result that the means providing spring bias, which the balls overcome when the clutch slips, cannot urge the balls into their inactive positions in the recesses. The friction in the clutch thus decreases, and consists solely of the frictional torque between the balls and the groove made in the cylindrical surface of the driving shaft, with a consequential lowering of heat generation and wear in the clutch.

In reversing the driving direction, the balls are returned to their normal operational position, so that the means providing spring bias can urge the balls towards the recesses for the continued normal operation of the clutch. In order to avoid the clutch disengaging unintentionally on reversed rotation, at least one of the chambers is arranged with a reverse lock.

The reverse lock can be implemented in different ways, but it is preferably such that the wall plane of the chamber forms an angle to the direction of the normal wall plane, this direction being parallel to a radius drawn through the centre of rotation of the shafts and the centre of the ball in question, so that an imagined line between both points of contact of the ball with the driving and driven shafts extends through or outside the centre of the ball, as seen from the axis common to the shafts. Alternatively the reverse lock may be an opening in the chamber wall facing in the reverse direction.

Preferred Embodiments

The torque coupling in accordance with the invention will now be described in detail with reference to the accompanying drawing, which illustrates different preferred embodiments of the torque coupling used in connection with a tap holder of the kind described in the above-mentioned patent application. The inventive torque coupling is not to be regarded as restricted to these embodiments, nor to the exemplifying tap holder, but it is applicable wherever such torque couplings can be used. On the drawing,

Figure 1 is a diametral section through a torque coupling in accordance with the invention, illustrating different configurations of the chambers on the driving shaft,

Figure 2 is a section along the line II - II in Figure 1, and

Figure 3 illustrates a detail in connection with explaining one embodiment of the reverse lock.

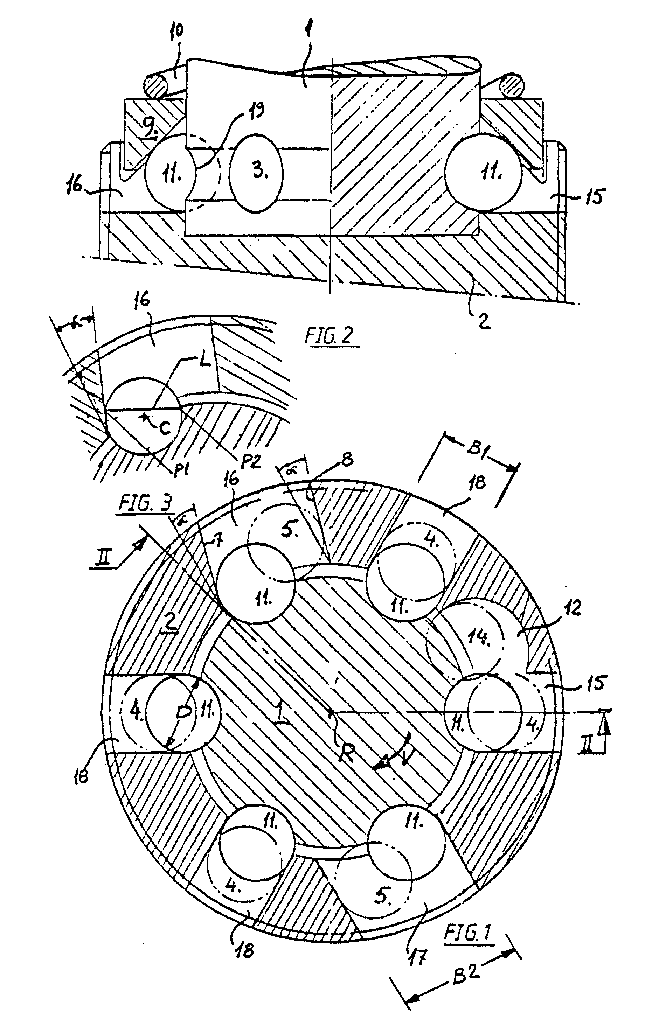

As will be seen from Figures 1 and 2, there is a driving shaft 1 and a driven shaft 2. A plurality of recesses 3 are made in the shaft 1, and these are joined together by a groove 19. In the normal operation of the torque coupling, a ball 11 rests in each recess, thus forming the coupling to the driven shaft 2, which has chambers 18, into which the balls 11 thrust. The chambers 18 normally have a width B1 corresponding to the diameter D of the balls 11. The depth of the recesses 3 is suited to the spring bias of a spring 10 via a bolster ring 9 (Figure 2). The bias is settable. When the driving torque in the driven shaft 2 exceeds the set spring bias the balls 11 are urged out of the recesses 3 into the position 4, the engagement between shafts 1 and 2 ceasing when the balls have completely left the recesses 3 and have been urged into the chambers 18. With the torque couplings of this kind in the prior art there are then the complications mentioned above.

To balance the torque coupling in accordance with the invention, at least one of the chambers, here denoted 17, has been made with a greater width B2 than the ball diameter D. The width B2 should be at least equal to 1.5 D. When the torque coupling is disengaged, i.e. when the driving torque exceeds the set spring bias, the balls 11 will be urged into the chambers 17, 18, but the ball 11 associated with the chamber 17 will furthermore move to position 5 and stay there until reversal takes place. When the ball assumes position 5, the bolster ring 9 is kept raised, and accordingly the remaining balls 11 are not urged into their respective recesses 3. There is thus obtained a driving torque in a disengaged state which is substantially lower than the disengaging torque occurring at the disengaged occasion (and which remained in torque couplings of the prior art, with the previously described problems as a result). The balls 11 come solely into contact with the groove 19.

In order to prevent unintentional disengagement of the torque coupling when its rotational direction is reversed, at least one of the chambers 18 is provided a reverse lock. This reverse lock can be achieved by the chamber wall plane 7, 8 being given an angled attitude, as illustrated for chamber 16 (in comparison with the wall plane of chamber 17). The wall plane 7, 8 of chamber 16 is thus inclined forwards in the normal rotational direction V, with an angle $\propto$ to the normal wall plane direction, which is parallel to the radius through the centre of the ball associated with the chamber. The size of the angle $\propto$ is here such that an imagined line L (Figure 3) connecting both contact points P1, P2 of the ball with the driving shaft 1 and the driven shaft 2 extends through the centre C of the ball or lies outside this centre, seen from the common rotational axis R of the shafts 1, 2. The force component acting on the ball will therefore keep it in the recess 3 for reverse rotational direction.

An alternative embodiment of the reverse lock is illustrated in Figure 1 in conjunction with the chamber 15. Here an opening 12 has been made in the wall of chamber 15 being situated rearwards in the normal forward rotational direction according to the arrow V. The opening 12 has a shape suitable for accommodating the ball 11, which is the case when the rotational direction is reversed counter to the arrow V and the torque exceeds the set spring bias. The ball 11 accommodated by the opening 12 is retained in its recess 3 (position 14 in Figure 1) in spite of the disengaged situation that has arisen, by the wall surface of the opening 12 keeping the ball in this position.

As will be understood from the above, at least one of the chambers shall be wider than the ball diameter, and at least one of them shall have a reverse lock. Both these facilities may be arranged together at one chamber, e.g. chamber 16. Even so, it is most advantageous to form two diametrically opposite chambers with the greater width, so that also uniform loading is obtained on the driven shaft for the case where it is disengaged. One or both of these chambers can also have an inclined wall plane, or the reverse lock can be arranged in the form of an opening in a third one of the chambers.

Further embodiments are of course conceivable within the scope of the invention, and these may be such as providing the torque coupling with three chambers of the greater width at 120° spacing. One or more of these can be formed with the inclined wall plane, or a fourth chamber can have the reverse lock in the form of the opening described above. When the clutch is to have its operational, rotational direction counter to the arrow V according to Figure 1, the inclined wall plane or the openings of the chambers are executed to opposite hand.

## Claims

1. A settable slip clutch or coupling arranged between the end of a driving shaft (1) having a cylindrical external surface and the top of a driven shaft (2) the length axis of which being a continuation of the driving shaft length axis and to which torque is applied from the driving shaft (1) particularly for tap holders, said slip clutch or coupling including an even number of engagement balls (11) disposed in recesses (3) corresponding to the number of balls, each of said balls having a center, a radius and a diameter (D), the recesses (3) being made in the external surface of the driving shaft (1) and connected by a groove (19) made in the external surface of the driving shaft (1) and shallower than the recesses (3) which have a radius corresponding to the radius of the balls (11), said balls (11) thrusting into a corresponding number of chambers (15 - 18) defined in the driven shaft (2) top end and having spaced-apart walls, said balls (11) in normal operation being kept urged into said recesses (3) by spring bias (9, 10), which is settable to a desired value of the torque at which the driving shaft (1) shall be disengaged from the driven shaft (2),
wherein:
said chambers (15 - 18) are arranged in pairs diametrically opposed each other,
the walls defining each chamber (15 - 18) being mutually parallel, the extended wall surface lines of the chamber run on separate sides of the central axis (R) of the driving (1) and driven (2) shafts,
at least half the number of the chambers (15 - 18) have a width mainly restricted to the diameter (D) of the ball (11) belonging thereto, the parallel walls of each one of these restricted chambers (15, 18) being parallel to a radius drawn through a center of the chamber (15, 18) and through the central axis (R) of the driving (1) and driven (2) shafts,
at least one (16, 17,) of the chambers (15 - 18) at the top end of the driven shaft (2) has an increased width (B2) being greater than the diameter (D) of its associated ball (11) so that said chambers have different shapes determined by the widths thereof and
at least one of the walls (7, 8; 12, 15) of anyone of the chambers (16, 17; 15, 18) forming a reverse lock.

2. Clutch or coupling as claimed in claim 1, characterized in that two diametrically opposed chambers (16, 17) have said increased width (B2).

3. Clutch or coupling as claimed in claim 1, characterized in that chambers at 120° spacing have said increased width (B2).

4. Clutch or coupling as claimed in claim 1, wherein said driving and driven shafts (1, 2) have a central axis (R) and wherein said driving shaft (1) has a normal operational direction of rotation, and characterized in that the reverse lock is made by each wall (7, 8) defining a corresponding wall plane forming an angle ($\propto$) to a radius drawn through said central axis (R) and the centre of the ball (11) associated with the chamber, whereby an imagined line (L) joining both contact points (P1, P2) of the ball (11 ) with the driving shaft (1) and the driven shaft (2) at the normal operational direction of rotation of said driving shaft (1) extends through or outside the centre (c) of the ball, seen from the said central axis (R).

5. Clutch or coupling as claimed in claim 1, wherein said driving shaft (1) has a normal operational direction of rotation and characterized in that the reverse lock is made by an opening (12) in the wall of the chamber (15) extending in a direction opposite to said normal operational direction of rotation.

6. Clutch or coupling as claimed in claim 1, characterized in that said reverse lock is formed by the walls (7, 8) of at least one of the chambers (16, 17) having the increased width (B2).

7. Clutch or coupling as claimed in claim 1, characterized in that said reverse lock is formed by the wall of one of the chambers (15, 18) having a restricted width.

## Revendications

1. Accouplement ou embrayage à glissement réglable placé entre l'extrémité d'un arbre menant (1) présentant une surface extérieure cylindrique et le d'un arbre mené (2) dont l'axe longitudinal est dans la continuité de l'axe longitudinal de l'arbre menant et auquel on applique un couple à partir de l'arbre menant (1) particulièrement pour des porte-mèches, ledit accouplement ou embrayage à glissement comprenant un nombre pair de billes (11) pour l'engagement disposées dans des creux (3) correspondant au nombre de billes, chacune desdites billes ayant un centre, un rayon et un diamètre (D), les creux (3) étant ménagés dans la surface extérieure de l'arbre menant (1) et reliés par une rainure (19) évidée dans la surface extérieure de l'arbre menant (1) et moins profonde que les creux (3) qui ont un rayon correspondant au rayon des billes (11), lesdites billes (11) poussant dans un nombre correspondant de chambres (15-18) ménagées dans l'extrémité supérieure de l'arbre mené (2) et ayant des parois écartées l'une de l'autre, lesdites billes (11) étant, en fonctionnement normal, maintenues poussées dans lesdits creux (3) par la poussée des ressorts (9, 10), qui peut être réglé à une valeur désirée du couple pour laquelle l'arbre menant (1) sera désaccouplé de l'arbre mené (2),
dans lequel :
lesdites chambres (15 - 18) sont disposées par paires diamétralement opposées entre elles,
les parois définissant chaque chambre (15 - 18) étant parallèles entre elles, les lignes de surface de la paroi avancée de la chambre se trouvant sur des côtés séparés de l'axe central (R) des arbres menant (1) et mené (2),
au moins la moitié du nombre des chambres (15 - 18) ont une largeur principalement réduite au diamètre (D) de la bille (11) qui leur est associée, les parois parallèles de chacune des chambres réduites (15, 18) étant parallèles à un rayon passant par un centre de la chambre (15, 18) et par l'axe central (R) des arbres menant (1) et mené (2),
au moins une (16, 17) des chambres (15 - 18) à l'extrémité supérieure de l'arbre mené (2) a une largeur accrue (B2) supérieure au diamètre (D) de sa bille associée (11) de sorte que lesdites chambres ont des formes différentes déterminées par leur largeur et
au moins une des parois (7, 8; 12, 16) de n'importe laquelle des chambres (16, 17; 15, 18) formant un antiretour.

2. Accouplement ou embrayage selon la revendication 1, caractérisé en ce que deux chambres diamétralement opposées (16, 17) présentent ladite largeur accrue (B2).

3. Accouplement ou embrayage selon la revendication 1, caractérisé en ce que des chambres présentant un écartement de 120 degrés ont ladite largeur accrue (B2).

4. Accouplement ou embrayage selon la revendication 1, dans lequel lesdits arbres menant et mené (1, 2) ont un axe central (R) et dans lequel ledit arbre menant (1) a un sens de rotation fonctionnel normal, et caractérisé en ce que l'antiretour est fait par chaque paroi (7, 8) qui définit un plan de paroi correspondant formant un angle (∝) avec un rayon passant par ledit axe central (R) et le centre de la bille (11) associée à la chambre, dans lequel une ligne imaginaire (L) joignant les deux points de contact (P1, P2) de la bille (11) avec l'arbre menant (1) et l'arbre mené (2) dans le sens de rotation fonctionnel normal dudit arbre mené (1) passe par le centre (c) de la bille, tel que vu depuis ledit axe central (R), ou à l'extérieur du centre (c) de la bille.

5. Accouplement ou embrayage selon la revendication 1, dans lequel ledit arbre menant (1) a un sens de rotation fonctionnel normal et caractérisé en ce que l'antiretour est fait par une ouverture (12) dans la paroi de la chambre (15) s'étendant dans une direction opposée audit sens de rotation fonctionnel normal.

6. Accouplement ou embrayage selon la revendication 1, caractérisé en ce que l'antiretour est formé par les parois (7, 8) d'au moins une des chambres (16, 17) qui ont une largeur accrue (B2).

7. Accouplement ou embrayage selon la revendication 1, caractérisé en ce que ledit antiretour est formé par la paroi d'une des chambres (15, 18) qui a une largeur réduite.

## Ansprüche

1. Regulierbare Rutschkupplung, die zwischen dem Ende einer Antriebswelle (1) mit einer zylindrischen Außenfläche und dem Ende einer angetriebenen Welle (2) angeordnet ist, deren Längsachse die Fortsetzung der Längsachse der Antriebswelle darstellt und auf welche von der Antriebswelle (1) her ein Drehmoment ausgeübt wird, wobei die Kupplung eine gerade Anzahl von Mitnehmerkugeln (11) aufweist, die in der Anzahl von Kugeln entsprechenden Ausnehmungen (3) liegen und einen Mittelpunkt, einen Radius und einen Durchmesser (D) haben, wobei die Ausnehmungen (3) in der Außenfläche der Antriebswelle (1) angebracht sind und durch eine Nut (19) verbunden sind, die in der Außenfläche der Antriebswelle (1) vorgesehen ist und seichter ist, als die Ausnehmurgen (3), welche einen dem Radius der Kugeln (11) entsprechenden Radius aufweisen, die in einer entsprechenden Anzahl von Kammern (15-18) stecken, welche am oberen Ende der Antriebswelle (2) vorgesehen sind und von einander getrennte Wandungen aufweisen, Wobei die Kugeln (11) bei normalem Betrieb in den Ausnehmungen (3) durch Druckorgane (9, 10) gehalten sind, deren Druck auf einen gewünschten Wert des Drehmomentes einstellbar ist, bei welchem die Antriebswelle (1) von der angetriebenen Welle (2) freigegeben werden soll, dadurch gekennzeichnet, daß die Kammern (15-18) in einander diametral gegenüberliegenden Paaren angeordnet sind und die jede Kammer (15-18) definierenden Wandungen gegenseitig parallel verlaufen, wobei die verlängerten Wandflächenlinien der Kammern auf verschiedenen Seiten der Mittelachse (R) der Antriebswelle (1) und der angetriebenen Welle (2) verlaufen und wenigstens die halbe Anzahl von Kammern (15-18) eine Breite aufweist, die im wesentlichen auf den Durchmesser (D) der dazugehörigen Kugel (11) begrenzt ist, und wobei parallele Wandungen jeder dieser begrenzten Kammern (15-18) parallel zu einem Radius verlaufen, der durch ein Zentrum der Kammer (15-18) und durch die Mittelachse (R) der Antriebswelle (1) und der getriebenen Welle (2) gezogen ist, wobei wenigstens eine (16, 17) der Kammern (15-18) am oberen Ende der angetriebenen Welle (2) eine erhöhte Breite (B2) aufweist, die größer als der Durchmesser (D) der zugeordneten Kugel (11) ist, so daß die Kammern verschiedene durch ihre Breiten bestimmte Formen haben und wenigstens eine der Wandungen (7, 8; 12, 15) von irgendeiner Kammer (16, 17; 15, 18) eine Rücklaufsperre bildet.

2. Kupplung nach Patentanspruch 1, dadurch gekennzeichnet, daß zwei diametral gegenüberliegenade Kammern (16, 17) erhöhte Breite (B2) aufweisen.

3. Kupplung nach Patentanspruch 1, dadurch gekennzeichnet, daß Kammern bei 120° Abstand erhöhte Breite (B2) aufweisen.

4. Kupplung nach Patentanspruch 1, wobei dien Antriebswelle (1) und die getriebene Welle (2) eine Mittelachse (R) haben und die Antriebswelle (1) eine normale Arbeitsdrehrichtung hat, dadurch gekennzeichnet, daß die Rücklaufsperre durch jede Wandung (7, 8) gebildet ist, die eine entsprechende Wandebene definiert, welche einen Winkel ($\propto$) zu einem Radius bildet, der durch die Mittelachse (R) und das Zentrum der der Kammer zugeordneten Kugel (11) gezogen ist, wobei eine imaginäre Linie (L), die beide Berührungspunkte (P1, P2) der Kugel (11) mit der Antriebswelle (1) und der getriebenen Welle (2) bei normaler Arbeitsdrehrichtung der Antriebswelle (1) verbindet, sich von der Mittelachse (R) aus gesehen durch oder außerhalb des Zentrums (C) der Kugel erstreckt.

5. Kupplung nach Patentanspruch 1, bei der die Antriebswelle (1) normale Arbeitsdrehrichtung hat, dadurch gekennzeichnet, daß die Rücklaufsperre durch eine Öffnung (12) in der Wandung der Kammer (15) gebildet ist, die sich in eine Richtung entgegen der normalen Arbeitsdrehrichtung erstreckt.

6. Kupplung nach Patentanspruch 1, dadurch gekennzeichnet, daß die Rücklaufsperre durch die Wandungen (7, 8) wenigstens einer der Kammern (16, 17) mit erhöhter Breite (B2) gebildet ist.

7. Kupplung nach Patentanspruch 1, dadurch gekennzeichnet, daß die Rücklaufsperre durch die Wandung einer der Kammern (15, 18) mit begrenzter Breite gebildet ist.

FIG.2

FIG.3

FIG.1